# EUROPÄISCHE PATENTANMELDUNG

(11) **EP 3 072 594 A1**
(43) Veröffentlichungstag der Anmeldung: **28.09.2016**
(21) Anmeldenummer: 15000884.5
(22) Anmeldetag: 26.03.2015
(51) Int. Cl.: B01L 3/00, B01L 3/02

(54) **Vorrichtung und Verfahren zur Bestimmung des Volumens einer Flüssigkeit**

(71) Anmelder: Euroimmun Medizinische Labordiagnostika AG, 23560 Lübeck (DE)
(72) Erfinder: Stöcker, Winfried, 23627 Gross Grönau (DE); Wuttig, Daniel, 23552 Lübeck (DE)

(57) **Zusammenfassung**

Die vorliegende Erfindung betrifft eine Vorrichtung zur Bestimmung des Volumens einer Flüssigkeit, die aus einem Gerät zur gesteuerten Aufnahme und Abgabe der Flüssigkeit mit einer Abgabeöffnung abgegeben wird, umfassend eine Einlassbohrung, die so an die Abgabeöffnung des Gerätes angepasst ist, dass dieses eingeführt und daraus druckabschließend Flüssigkeit aufgenommen oder abgegeben werden kann, wobei die Einlassbohrung mit einem Messkanal verbunden ist, so dass in das Gerät abgegebene Flüssigkeit in diesen vordringt und aus dem Gerät aufgenommene Flüssigkeit in diesem zurückweicht, und wobei der Messkanal wenigstens eine Markierung aufweist und detektiert werden kann, ob die aus dem Gerät abgegebene Flüssigkeit die Markierung erreicht.;
sowie ein Verfahren zur Bestimmung des Volumens einer Flüssigkeit, die mit Hilfe eines zur gesteuerten Aufnahme und Abgabe einer Flüssigkeit geeigneten Gerätes aufgenommenen oder abgegebenen wird, umfassend die Schritte Einführen des flüssigkeitsgefüllten Gerätes in die Einlassbohrung der Vorrichtung, druckabschließendes Abgeben der in dem Gerät enthaltenen Flüssigkeit, so dass die Flüssigkeitssäule im Messkanal vordringt, und Detektieren, ob die im Messkanal vordringende Flüssigkeitssäule die Markierung erreicht hat,
oder umfassend die Schritte Bereitstellen der Vorrichtung mit einem im Messkanal vorgelegten Flüssigkeitsvolumen, Einführen des zur gesteuerten Aufnahme und Abgabe der Flüssigkeit geeigneten Gerätes, unter Verwendung des Gerätes Aufnehmen eines festgelegten Volumens aus der im Messkanal vorgelegten Flüssigkeit, so dass die im Messkanal vorgelegte Flüssigkeitssäule zurückweicht, und Detektieren, ob die im Messkanal zurückweichende Flüssigkeitssäule die Markierung erreicht hat.

## Beschreibung

Die vorliegende Erfindung betrifft eine Vorrichtung zur Bestimmung des Volumens einer Flüssigkeit, die aus einem Gerät zur gesteuerten Aufnahme und Abgabe der Flüssigkeit mit einer Abgabeöffnung abgegeben oder in dieses aufgenommen wird, umfassend eine Einlassbohrung, die so an die Abgabeöffnung des Gerätes angepasst ist, dass dieses eingeführt und druckabschließend Flüssigkeit aufgenommen oder abgegeben werden kann, wobei die Einlassbohrung mit einem Messkanal verbunden ist, so dass in das Gerät abgegebene Flüssigkeit in diesen vordringt und aus dem Gerät aufgenommene Flüssigkeit in diesem zurückweicht, und wobei der Messkanal wenigstens eine Markierung aufweist und detektiert werden kann, ob die aufgenommene oder abgegebene Flüssigkeit die Markierung erreicht;
sowie ein Verfahren zur Bestimmung des Volumens einer Flüssigkeit, die mit Hilfe eines zur gesteuerten Aufnahme und Abgabe einer Flüssigkeit geeigneten Gerätes aufgenommenen oder abgegebenen wird, umfassend die Schritte Einführen des flüssigkeitsgefüllten Gerätes in die Einlassbohrung der Vorrichtung, druckabschließendes Abgeben der in dem Gerät enthaltenen Flüssigkeit, so dass die Flüssigkeitssäule im Messkanal vordringt, und Detektieren, ob die im Messkanal vordringende Flüssigkeitssäule die Markierung erreicht hat,
oder umfassend die Schritte Bereitstellen der Vorrichtung mit einem im Messkanal vorgelegten Flüssigkeitsvolumen, Einführen des zur gesteuerten Aufnahme und Abgabe der Flüssigkeit geeigneten Gerätes, unter Verwendung des Gerätes Aufnehmen eines festgelegten Volumens aus der im Messkanal vorgelegten Flüssigkeit, so dass die im Messkanal vorgelegte Flüssigkeitssäule zurückweicht, und Detektieren, ob die im Messkanal zurückweichende Flüssigkeitssäule die Markierung erreicht hat.

Für zahlreiche technische Anwendungen, bei denen wiederholt Reaktionen in einem flüssigen Medium angesetzt werden müssen, beispielsweise auf dem Gebiet der Diagnostik, bedient man sich technischer Hilfsmittel. Besonders nützlich sind Geräte, die dafür eingerichtet sind, ein festgelegtes Volumen einer Flüssigkeit aus einem ersten Gefäß aufzunehmen und dieses in ein anderes Gefäß abzugeben.

Besonders bekannt sind handelsübliche Pipetten. Ihr Einsatz gestattet die Automatisierung der Flüssigkeitsübertragung sowie, wenigstens im Vergleich zu traditionellen Methoden wie dem Einsatz von Messzylindern, eine höhere Genauigkeit und Reproduzierbarkeit, auch dann, wenn das zu übertragende Volumen gering ist und beispielsweise nur wenige Mikroliter beträgt.

Werden solche Geräte über einen bestimmten Zeitraum wiederholt verwendet, so kann es aufgrund von Verschleiß zu einer Verstellung kommen. In der Folge weicht das tatsächlich übertragene Flüssigkeitsvolumen von dem eingestellten Zielvolumen zunehmend ab.

Aus zahlreichen Gründen sind derartige Abweichungen problematisch. Im Falle einer synthetischen chemischen Reaktion stimmt das Verhältnis der eingesetzten Edukte nicht mehr, und es kommt zu Ausbeuteverlusten. Im Falle einer analytisch oder diagnostisch nutzbaren Reaktion kann die Empfindlichkeit nachlassen oder im schlimmsten Fall das Ergebnis verfälscht werden.

Aus diesem Grund ist es notwendig, Geräte zur Aufnahme und Abgabe von Flüssigkeiten regelmäßig zu kalibrieren, d.h. ihre Genauigkeit zu überprüfen und sie bei Bedarf neu einzustellen.

Traditionell wird die Kalibration dadurch bewerkstelligt, dass mit dem Gerät ein festgelegtes Volumen einer Flüssigkeit mit bekannter Dichte aufgenommen wird, beispielweise Wasser, das man anschließend wiegt. Aus dem Gewicht ergibt sich dann das Volumen. Alternativ kann eine radioaktive Flüssigkeit aufgenommen und anschließend mit einem Szintillationszähler ausgezählt werden.

Solche Kalibrierungen sind aufwändig und fehleranfällig, insbesondere dann, wenn das Ergebnis von der Genauigkeit anderer verschleißanfälliger Geräte wie Waagen abhängig ist. Nicht zuletzt sind mehrere Versuchsschritte und nachfolgende Berechnungen notwendig.

Vor diesem Hintergrund besteht die der vorliegenden Erfindung zu Grunde liegende Aufgabe darin, eine Vorrichtung bereitzustellen, mit der wenigstens einer der Nachteile der im Stande beschriebenen Verfahren und Vorrichtungen zur Kalibration überwunden wird.

Insbesondere soll eine Vorrichtung zur Kalibration bereitgestellt werden, die ihrerseits vom Anwender nicht kalibriert werden muss. Die Kalibration soll ohne Rechenschritte möglich und das Ergebnis möglichst auf einen Blick auch für Personal ohne gehobene Qualifikation erkennbar sein.

Das Gesamtverfahren soll mit möglichst wenig Geräte- und Zeitaufwand durchführbar sein. Die Fehleranfälligkeit und Abhängigkeit von äußeren Bedingungen wie Temperatur, Luftfeuchtigkeit und Luftdruck sind zu minimieren.

Diese und weitere Aufgaben werden durch den Gegenstand der vorliegenden Anmeldung und insbesondere auch durch den Gegenstand der beigefügten unabhängigen Ansprüche gelöst, wobei sich Ausführungsformen aus den Unteransprüchen ergeben.

Die der Erfindung zu Grunde liegende Aufgabe wird in einem ersten Aspekt gelöst durch eine Vorrichtung zur Bestimmung des Volumens einer Flüssigkeit, die aus einem Gerät zur gesteuerten Aufnahme und Abgabe der Flüssigkeit mit einer Abgabeöffnung abgegeben wird,
umfassend eine Einlassbohrung, die so an die Abgabeöffnung des Gerätes angepasst ist, dass dieses eingeführt und daraus druckabschließend Flüssigkeit aufgenommen oder abgegeben werden kann,
wobei die Einlassbohrung mit einem Messkanal verbunden ist, so dass in das Gerät abgegebene Flüssigkeit in diesen vordringt oder aus dem Gerät aufgenommene Flüssigkeit in diesem zurückweicht,
und wobei der Messkanal wenigstens eine Markierung aufweist und detektiert werden kann, ob im Messkanal vordringende oder zurückweichende Flüssigkeit die Markierung erreicht.

In einer ersten bevorzugten Ausführungsform des ersten Aspekts ist die Vorrichtung so ausgestaltet, dass die abgegebene Flüssigkeit in Form einer kompakten Flüssigkeitssäule in den Messkanal vordringt oder daraus zurückweicht.

In einer zweiten bevorzugten Ausführungsform, bei der es sich auch um eine bevorzugte Ausführungsform der ersten bevorzugten Ausführungsform handelt, ist der Messkanal in Form einer Röhre ausgeführt und Flüssigkeit darin in Form einer den Vertikaldurchschnitt des Messkanals ausfüllenden Flüssigkeitssäule vorliegt.

In einer dritten bevorzugten Ausführungsform, bei der es sich auch um eine bevorzugte Ausführungsform der ersten bis zweiten bevorzugten Ausführungsform handelt, mündet der Messkanal in eine Auslassbohrung.

In einer vierten bevorzugten Ausführungsform, bei der es sich auch um eine bevorzugte Ausführungsform der ersten bis dritten bevorzugten Ausführungsform handelt, handelt es sich bei dem Gerät um eine Pipette, bevorzugt besetzt mit einer abnehmbaren Pipettenspitze.

In der fünften bevorzugten Ausführungsform, bei der es sich auch um eine bevorzugte Ausführungsform der ersten bis vierten bevorzugten Ausführungsform handelt, wird visuell detektiert, ob die im Messkanal vordringende oder zurückweichende Flüssigkeit die Markierung erreicht.

In der sechsten bevorzugten Ausführungsform, bei der es sich auch um eine bevorzugte Ausführungsform der ersten bis vierten bevorzugten Ausführungsform handelt, wird mit Hilfe eines Sensors detektiert, ob die Flüssigkeit die Markierung erreicht.

In der siebten bevorzugten Ausführungsform, bei der es sich auch um eine bevorzugte Ausführungsform der ersten bis sechsten bevorzugten Ausführungsform handelt, mündet die Einlassbohrung in ein Sammelbecken, das mit dem Messkanal verbunden ist und derart ausgestaltet ist, dass nur dann Flüssigkeit in den Messkanal vordringt, wenn das Sammelbecken vollständig mit Flüssigkeit gefüllt ist.

In der achten bevorzugten Ausführungsform, bei der es sich auch um eine bevorzugte Ausführungsform der ersten bis siebten bevorzugten Ausführungsform handelt, weist der Messkanal mehr als eine Markierung auf.

In der neunten bevorzugten Ausführungsform, bei der es sich auch um eine bevorzugte Ausführungsform der ersten bis achten bevorzugten Ausführungsform handelt, ist die Einlassbohrung mit einem elastischen Material ausgekleidet, das bevorzugt in Form eines an die Form der Einlassbohrung angepassten Einsatzes ausgestaltet ist.

In der zehnten bevorzugten Ausführungsform, bei der es sich auch um eine bevorzugte Ausführungsform der ersten bis neunten bevorzugten Ausführungsform handelt, umfasst die Einlassbohrung einen oberen Teil, dessen Umfang den des eingeführten Gerätes übersteigt, bevorzugt in Form einer Halbkugel oder eines Ausschnittes daraus, sowie einen unteren Teil, dessen Umfang an wenigstens einer Stelle so bemessen ist, dass das vertikale Einführen des Gerätes begrenzt wird.

In der elften bevorzugten Ausführungsform, bei der es sich auch um eine bevorzugte Ausführungsform der ersten bis zehnten bevorzugten Ausführungsform handelt, wird das vertikale Einführen des Gerätes dadurch begrenzt, dass die Abgabeöffnung auf eine das weitere vertikale Einführen verhindernde Struktur der Einlassbohrung aufsetzt.

Die der Erfindung zu Grunde liegende Aufgabe wird in einem zweiten Aspekt gelöst durch ein Verfahren zur Bestimmung des Volumens einer Flüssigkeit in einem zur gesteuerten Aufnahme und Abgabe der Flüssigkeit geeigneten Gerät, umfassend die Schritte
a1) Einführen des flüssigkeitsgefüllten Gerätes in die Einlassbohrung der Vorrichtung nach einem der Ansprüche 1 bis 12,
b1) druckabschließendes Abgeben der in dem Gerät enthaltenen Flüssigkeit, so dass die Flüssigkeitssäule im Messkanal vordringt, und
c1) Detektieren, ob die im Messkanal vordringende Flüssigkeitssäule die Markierung erreicht hat,
oder umfassend die Schritte:
a2) Bereitstellen der Vorrichtung nach einem der Ansprüche 1 bis 12 mit einem im Messkanal vorgelegten Flüssigkeitsvolumen,
b2) Einführen des zur gesteuerten Aufnahme und Abgabe der Flüssigkeit geeigneten Gerätes,
c2) unter Verwendung des Gerätes Aufnehmen eines festgelegten Volumens aus der im Messkanal vorgelegten Flüssigkeit, so dass die im Messkanal vorgelegte Flüssigkeitssäule zurückweicht,
d2) Detektieren, ob die im Messkanal zurückweichende Flüssigkeitssäule die Markierung erreicht hat.

In einer ersten bevorzugten Ausführungsform des zweiten Aspekts umfasst das erfindungsgemäße Verfahren nachfolgend dem Schritt c1) weiter den Schritt:
d1) Entfernen der Flüssigkeit aus der Vorrichtung.

Die erfindungsgemäße Vorrichtung dient der Bestimmung des Volumens, das aus einem Gerät zur gesteuerten Aufnahme und Abgabe einer Flüssigkeit abgegeben oder von einem solchen Gerät aufgenommen wird. Bei diesem Gerät kann es sich um sämtliche derartige Geräte handeln, beispielsweise um eine Pumpe, einen Laborautomaten oder eine Pipette, bevorzugt um eine Pipette. Das abgegebene bzw. aufgenommene Volumen ist bevorzugt innerhalb eines vorgegebenen Bereiches variabel einstellbar.

Die erfindungsgemäße Vorrichtung umfasst einen dreidimensionalen Körper mit einer Einlassbohrung, die so ausgestaltet ist, dass aus dem Gerät Flüssigkeit ohne Volumenänderung, insbesondere ohne Volumenverlust, abgegeben oder von einem solchen Gerät aufgenommen werden kann. Die Einlassbohrung ist mit einem Messkanal verbunden. Dieser kann eine beliebige Form und Ausgestaltung annehmen, sofern die Flüssigkeit wiederum ohne Volumenänderung, insbesondere ohne Volumenverlust, darin vordringen kann. Es ist vorteilhaft, wenn der Messkanal weder eine positive noch negative Steigung aufweist, sondern horizontal verläuft, damit der hydrostatische Druck der Flüssigkeitsäule bzw. die Schwerkraft das Ergebnis nicht beeinflussen.

Die Vorrichtung ist so beschaffen, dass die Flüssigkeit ungehindert eindringen oder zurückweichen kann. Das verdrängte Volumen wird über ein dazu geeignetes Mittel abgeführt, beispielsweise eine Auslassbohrung. Eine solche Auslassbohrung kann zum Schutz vor Verschmutzung eine nicht druckabschließende Abdeckung aufweisen.

Die Vorrichtung besteht aus einem geeigneten Material mit ausreichender mechanischer und chemischer Stabilität, beispielsweise Kunststoff, wenn es sich bei der Flüssigkeit um Wasser handelt. Bevorzugt ist das Material transparent, wenigstens insoweit, wie es für eine optionale visuelle Detektion der Flüssigkeitssäule erforderlich ist.

Die Vorrichtung kann aus zwei flüssigkeitsdicht verbundenen Teilen bestehen, einer planen Grundplatte und einem Aufsatz, der Aushöhlungen in der Form aufweist, dass beim Aufsetzen des Aufsatzes auf die plane Grundplatte Einlassbohrung, Messkanal und Auslassbohrung gebildet werden, wobei die plane Grundplatte den Boden von Einlassbohrung, Messkanal und Auslassbohrung darstellt. Grundplatte und Aufsatz können durch Verklebung oder Befestigungsmittel verbunden werden, beispielsweise eine einrastende Steckverbindung.

Der Messkanal ist mit wenigstens einer Markierung versehen, die es dem Bediener gestattet, festzustellen, ob die darin vordringende oder zurückweichende Flüssigkeit diese Markierung erreicht hat. Die Vorrichtung ist so ausgestaltet, dass die Flüssigkeit die Markierung nur dann erreicht, wenn sie ein festgelegtes Volumen aufweist. Bevorzugt weist der Messkanal mehr als eine Markierung auf, die jeweils für ein bestimmtes Flüssigkeitsvolumen stehen. Damit kann der Betrachter das Volumen enger eingrenzen, als es mit nur einer Markierung möglich wäre. Bevorzugt kennzeichnen die Markierungen das Zielvolumen und zusätzlich einen Toleranzbereich um das Zielvolumen. Das Zielvolumen beträgt bevorzugt 1 bis 5000 µl, bevorzugter 10 bis 1000 µl, noch bevorzugter 50 bis 500 µl und der Toleranzbereich ± 10 %, bevorzugter ± 5 %, noch bevorzugter ± 1 % des Zielvolumens. Alternativ verläuft die Markierung durchgehend entlang wenigstens eines linearen Teils des Messkanals. Die Art der Markierung richtet sich nach der Verfahrungsführung, insbesondere danach, ob Flüssigkeit in die erfindungsgemäße Vorrichtung abgegeben oder daraus entnommen wird. Wird sie beispielsweise entnommen, so weicht die im Messkanal vorgelegte Flüssigkeit zurück, und die Markierung von Zielvolumen und Toleranzbereich befindet sich zwischen der Einlassbohrung und dem Ende der zu Beginn vorgelegten Flüssigkeitssäule.

Unter dem Begriff "Markierung" ist jegliche Ausgestaltung zu verstehen, die einen bestimmten Punkt oder Bereich im Messkanal festlegt. Beispielsweise kann es sich um eine visuell wahrnehmbare Markierung handeln, z. B. eine Kennzeichnung oder eine prägnante Form des Messkanals, die einen bestimmten Punkt fixiert, wie ein Mäander. Der Bediener kann optional visuell, d. h. durch bloße Betrachtung feststellen, ob die Flüssigkeit bis zu diesem Punkt vorgedrungen oder zurückgewichen ist. Die Markierung wird bevorzugt so gewählt, dass das Volumen, das die Flüssigkeit einnimmt, wenn sie bis zu dem durch die Markierung gekennzeichneten Punkt vordringt oder bis dahin zurückweicht, dem Zielvolumen entspricht, das idealerweise von dem Gerät abgegeben oder aufgenommen werden sollte.

Bevorzugt weist der Messkanal im Bereich der Markierungen, noch bevorzugter um die das Zielvolumen und den Toleranzbereich kennzeichnenden Markierungen einen engeren Durchmesser als davor auf, damit auch kleine Volumenunterschiede anhand der Markierungen mit ausreichender Auflösung wahrgenommen werden können. Alternativ ist der Durchmesser des Messkanals über die ganze Strecke, über die er sich entlang der planen Grundplatte erstreckt, gleich. Ein als Flüssigkeitsreservoir dienendes Kompartiment, das wenigstens 50 %, bevorzugt wenigstens 75 %, noch bevorzugter wenigstens 90 % des Zielvolumens umfasst, kann dem Messkanal vorgeschaltet sein.

Bei der Flüssigkeit kann es sich um jede Flüssigkeit handeln, die geeignete Eigenschaften aufweist, insbesondere mit Hinblick auf Viskosität, Flüchtigkeit und chemische Stabilität, um mit derartigen Geräten übertragen zu werden und in geeigneter Weise im Messkanal vorzudringen. Besonders bevorzugt handelt es sich um eine Flüssigkeit auf Wasserbasis, d. h. das vorherrschende oder einzige Lösungsmittel darin ist Wasser.

Die Flüssigkeit kann Zusatzstoffe enthalten, die die Detektion unterstützen. Ist eine visuelle Detektion vorgesehen, so kann die Flüssigkeit einen Farbstoff aufweisen, um den Kontrast gegenüber der Umgebung zu erhöhen, beispielsweise einen organischen Farbstoff oder ein farbiges anorganisches Salz.

Bevorzugt ist der Messkanal nach außen abgeschlossen und im Inneren der Vorrichtung angeordnet, bevorzugt in Form einer Röhre mit Markierungen. Auf diese Weise ist eine Verschmutzung durch eindringende Staubpartikel ausgeschlossen. Alternativ kann es sich um einen wenigstens teilweise nach oben offenen Kanal an der Oberfläche der Kalibriervorrichtung handeln.

Bevorzugt ist die Vorrichtung so ausgestaltet, dass die abgegebene oder entnommene Flüssigkeit in Form einer kompakten Flüssigkeitssäule in den Messkanal vordringt oder darin zurückweicht. Dies bedeutet, dass die von der Flüssigkeit ausgebildete Flüssigkeit beim Eintritt bzw. Vorlegen nicht etwa zunächst den gesamten Boden des Kanals benetzt und anschließend vertikal ansteigt. Vielmehr dringt sie aufgrund von Oberflächenspannung und Kapillarkräften in der Weise in den Kanal vor, dass sie diesen, soweit sie den Boden des Kanals benetzt, in vertikaler Richtung maximal ausfüllt, im Falle eines röhrenförmigen Kanals vollständig. Die Art der Flüssigkeit einerseits, insbesondere Hydrophilität und Oberflächenspannung, und Durchmesser und Oberfläche des Kanals andererseits werden entsprechend gewählt bzw. aneinander angepasst. Die Entstehung von Gasblasen ist zu unterbinden.

Neben der visuellen Detektion kann auch ein Sensor eingesetzt werden, um festzustellen, ob die Flüssigkeit beim Vordringen oder Zurückweichen im Messkanal eine oder mehr als eine Markierung erreicht. In einer bevorzugten Ausführungsform wird unter dem Begriff "Sensor", wie hierin verwendet, ein Mittel verstanden, das aufgrund veränderter physikalischer Größen die Feststellung, bevorzugt automatisch, gestattet, ob die Flüssigkeitssäule an einem bestimmten Punkt des Messkanals anwesend oder abwesend ist. Es kommen sämtliche Sensoren in Frage, die sich zur Detektion der Flüssigkeit eignen, beispielsweise Lichtschranken, Ultraschall- oder Brechungsindex-Sensoren.

Die Einlassbohrung ist bevorzugt so ausgestaltet, dass aus dem Gerät bzw. der erfindungsgemäßen Vorrichtung druckabschließend Flüssigkeit abgegeben bzw. entnommen werden kann. Sie kann mit einem elastischen Material ausgekleidet sein, beispielsweise einem elastischen Kunststoff wie Silikon, das bevorzugt in Form eines an die Form der Einlassbohrung angepassten Einsatzes ausgestaltet ist. Dadurch kann das Gerät mit etwas Druck in die Vorrichtung eingeführt werden. Dies vereinfacht den Druckabschluss beim Abgeben oder Entnehmen der Flüssigkeit.

Der Druckabschluss kann beim Abgeben insbesondere dazu dienen, dass von Flüssigkeit das im Messkanal ablesbare Volumen nicht durch das Verspritzen von Flüssigkeit oder das Einsaugen von Gasblasen verfälscht wird. Beim Aufnehmen trägt der Druckabschluss ebenfalls dazu bei, dass das entnommene Flüssigkeitsvolumen gleich dem im Gerät nach dem Aufnehmen enthaltenen Flüssigkeitsvolumen ist.

Bevorzugt umfasst die Einlassbohrung einen oberen Teil, der eine Öffnung mit einem Durchmesser freilässt, der den des eingeführten Gerätes übersteigt, bevorzugt in Form einer Halbkugel oder eines Ausschnittes daraus, sowie einen unteren Teil, dessen Öffnung einen Durchmesser aufweist, der an wenigstens einer Stelle so bemessen ist, dass das vertikale Einführen des Gerätes begrenzt wird. Der obere Teil, der sich zum Boden hin verjüngt, unterstützt den Bediener beim Einführen des Gerätes. Der untere Teil fixiert die Position des Gerätes und damit die Genauigkeit bei der Volumenmessung.

Bevorzugt wird das vertikale Einführen des Gerätes dadurch begrenzt, dass die Abgabeöffnung des Gerätes beim Einführen auf eine das weitere vertikale Einführen verhindernde Struktur der Einlassbohrung aufsetzt, die ebenfalls aus einem nicht verformbaren Material besteht. Sie umfasst besonders einen Kanal, so dass die Position des Gerätes wieder fixiert ist, Flüssigkeit aber ungehindert abgegeben bzw. aufgenommen werden kann.

Nach Durchführung des erfindungsgemäßen Verfahrens empfiehlt es sich, die in die erfindungsgemäße Vorrichtung abgegebene bzw. darin verbliebene Flüssigkeit daraus zu entfernen. Dies kann durch Ausblasen, bevorzugt über die Einlassbohrung, oder Anlegen von Unterdruck geschehen, bevorzugt über die Auslassbohrung, beispielsweise durch Aufsetzen einer Absaughaube. Optional kann die Vorrichtung nach einer Kalibration zur Reinigung durchgespült werden, beispielsweise mit destilliertem Wasser oder einer Waschflüssigkeit. Die zur Reinigung verwandte Flüssigkeit kann ebenfalls durch Ausblasen oder Absaugen entfernt werden. Alternativ wird für den letzten Waschschritt eine hoch volatile Flüssigkeit wie Isopropanol eingesetzt.

Das erfindungsgemäße Verfahren kann in Form von zwei Varianten ausgeführt werden. In beiden Fällen entspricht die Strecke, über die sich die Flüssigkeit im Messkanal bewegt, einem bestimmten Volumen, das anhand des Durchmessers des Messkanals und der Strecke berechnet werden kann. Dieses Volumen kann mit Hilfe der Markierung mit dem Sollwert, wie er im Gerät eingestellt ist, verglichen werden. Bevorzugt wird bei der ersten und/oder zweiten Variante druckabschließend gearbeitet.

In einer ersten Ausführungsform wird ein festgelegtes Volumen aus dem Gerät in die erfindungsgemäße Vorrichtung abgegeben. Sie dringt im Messkanal vor, und der Bediener kann detektieren, ob die wenigstens eine Markierung von der vordringenden Flüssigkeitssäule erreicht wird. Die Markierung ist derart ausgestaltet, dass der Bediener anhand dieser Information erkennen kann, ob das Gerät mit ausreichender Genauigkeit funktioniert oder nicht.

In einer zweiten Ausführungsform wird ein bekanntes Volumen einer Flüssigkeit in der Vorrichtung vorgelegt. Das Volumen kann so gewählt sein, dass die Flüssigkeitssäule bis in die Nähe des Endes des Messkanals reicht, aber nicht darüber hinaus, so dass der Bediener das Zurückweichen der Flüssigkeitssäule von Beginn an verfolgen kann. Auf der anderen Seite reicht die Flüssigkeitssäule bevorzugt bis zur Einlassbohrung, so dass sie über diese mit Hilfe des Gerätes entnommen werden kann. Anschließend wird das Gerät in die Einlassbohrung eingeführt und ein festgelegtes Volumen der Flüssigkeit entnommen, wobei diese im Messkanal zurückweicht. Wiederum der Bediener kann detektieren, ob die wenigstens eine Markierung von der vordringenden Flüssigkeitssäule erreicht wird und daraus ersehen, ob das Gerät mit ausreichender Genauigkeit funktioniert.

Im Folgenden wird die Erfindung unter Bezugnahme auf die Figuren anhand von Ausführungsbeispielen erläutert. Die beschriebenen Ausführungsformen sind in jeder Hinsicht lediglich beispielhaft und nicht als einschränkend zu verstehen, und verschiedene Kombinationen der angeführten Merkmale sind vom Umfang der Erfindung umfasst.

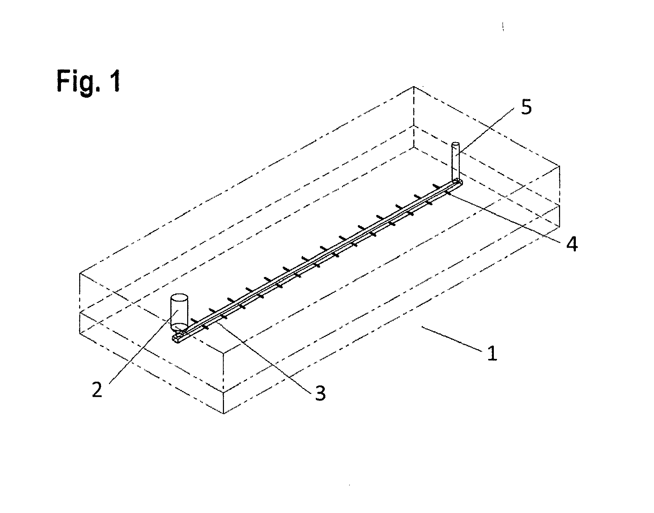

**Fig. 1** zeigt eine Vorrichtung zur Bestimmung des Volumens einer Flüssigkeit (1) umfassend eine Einlassbohrung (2), die so an die Abgabeöffnung des Gerätes angepasst ist, dass dieses eingeführt und druckabschließend Flüssigkeit abgegeben oder aufgenommen werden kann, und die mit einem Messkanal (3) verbunden ist, in den aus dem Gerät abgegebene Flüssigkeit vordringt, und eine Auslassbohrung (5). Der Messkanal weist wenigstens eine Markierung (4) auf.

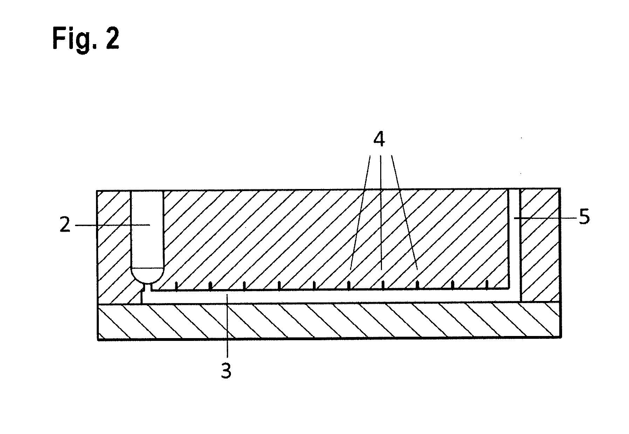

**Fig. 2** zeigt die identische Vorrichtung aus **Fig. 1** in einem Durchschnitt entlang der durch den Messkanal vorgegebenen Längsachse.

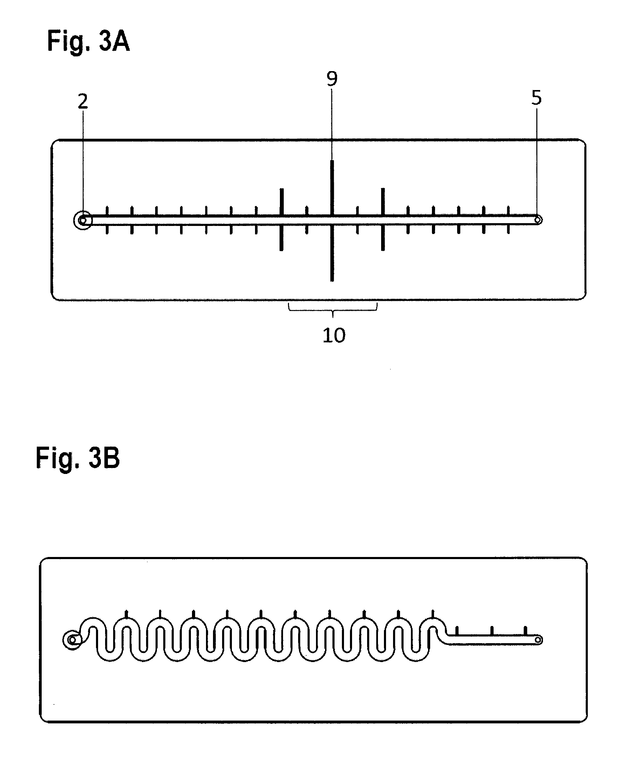

**Fig. 3A** zeigt die Vorrichtung von oben betrachtet. Sie ist identisch zu der in **Fig. 1** gezeigten, abgesehen davon, dass die Markierung das Zielvolumen (9) und einen Toleranzbereich (10) um das Zielvolumen anzeigen.
**Fig. 3B** zeigt die Vorrichtung von oben betrachtet. Sie ist identisch zu der in **Fig. 1** gezeigten, abgesehen davon, dass der Messkanal nicht geradlinig, sondern mäanderhaft entlang der Längsachse geführt ist. Jedes Minimum bzw. Maximum einer Mäander entlang der durch den Messkanal vorgegebenen Längsachse kann dabei ebenfalls als Markierung dienen.

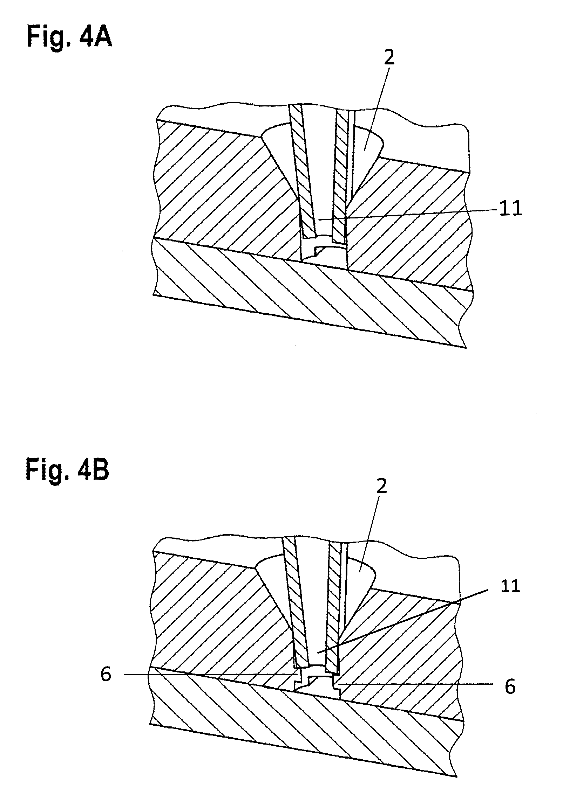

**Fig. 4A** zeigt eine erfindungsgemäße Einlassbohrung (2) im Durchschnitt mit der Abgabeöffnung eines Gerätes zur gesteuerten Aufnahme und Abgabe von Flüssigkeit (11).
**Fig. 4B** zeigt die identische erfindungsgemäße Einlassbohrung (2) wie in **Fig. 4A** mit der Abgabeöffnung (11) eines Gerätes zur gesteuerten Aufnahme und Abgabe von Flüssigkeit. Dessen Abgabeöffnung (11) sitzt auf einer Struktur (6) der Einlassbohrung, die das weitere vertikale Einführen verhindert.

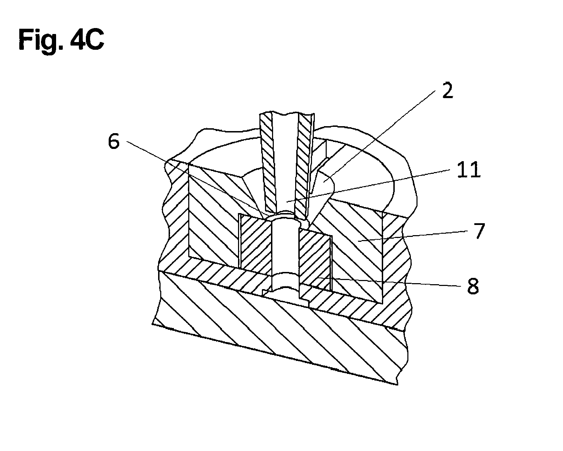

**Fig. 4C** zeigt eine erfindungsgemäße Einlassbohrung (2) mit der Ausgabeöffnung (11) eines Gerätes zur gesteuerten Aufnahme und Abgabe von Flüssigkeit. Sie weist einen oberen Teil in Gestalt eines an die Form der Einlassbohrung angepassten Einsatzes (7) mit einer integrierten Struktur auf, die das vertikale Eindringen begrenzt (6) und einen darin integrierten unteren Teil (8) aus einem elastischen Material, der das Totvolumen bei der Abgabe bzw. Aufnahme von Flüssigkeit reduziert.

### Bezugszeichenliste:

- 1: Vorrichtung
- 2: Einlassbohrung
- 3: Messkanal
- 4: Markierung
- 5: Auslassbohrung
- 6: Struktur, die das weitere vertikale Einführen verhindert
- 7: Oberer Teil
- 8: Unterer Teil
- 9: Zielvolumen
- 10: Toleranzbereich
- 11: Abgabeöffnung eines zur gesteuerten Aufnahme und Abgabe einer Flüssigkeit geeigneten Gerät

## Patentansprüche

1. Vorrichtung zur Bestimmung des Volumens einer Flüssigkeit, die aus einem Gerät zur gesteuerten Aufnahme und Abgabe der Flüssigkeit mit einer Abgabeöffnung abgegeben wird,
umfassend eine Einlassbohrung, die so an die Abgabeöffnung des Gerätes angepasst ist, dass dieses eingeführt und daraus druckabschließend Flüssigkeit aufgenommen oder abgegeben werden kann,
wobei die Einlassbohrung mit einem Messkanal verbunden ist, so dass in das Gerät abgegebene Flüssigkeit in diesen vordringt und aus dem Gerät aufgenommene Flüssigkeit in diesem zurückweicht,
und wobei der Messkanal wenigstens eine Markierung aufweist und detektiert werden kann, ob im Messkanal vordringende oder zurückweichende Flüssigkeit die Markierung erreicht.

2. Vorrichtung nach Anspruch 1,
wobei die Vorrichtung so ausgestaltet ist, dass die Flüssigkeit in Form einer kompakten Flüssigkeitssäule in den Messkanal vordringt oder daraus zurückweicht.

3. Vorrichtung nach einem der Ansprüche 1 bis 2,
wobei der Messkanal in Form einer Röhre ausgeführt ist und Flüssigkeit darin in Form einer den Vertikaldurchschnitt des Messkanals ausfüllenden Flüssigkeitssäule vorliegt.

4. Vorrichtung nach einem der Ansprüche 1 bis 3,
wobei der Messkanal in eine Auslassbohrung mündet.

5. Vorrichtung nach einem der Ansprüche 1 bis 4,
wobei es sich bei dem Gerät um eine Pipette handelt, bevorzugt besetzt mit einer abnehmbaren Pipettenspitze.

6. Vorrichtung nach einem der Ansprüche 1 bis 5,
wobei visuell detektiert wird, ob die im Messkanal vordringende oder zurückweichende Flüssigkeit die Markierung erreicht.

7. Vorrichtung nach einem der Ansprüche 1 bis 5,
wobei mit Hilfe eines Sensors detektiert wird, ob die Flüssigkeit die Markierung erreicht.

8. Vorrichtung nach einem der Ansprüche 1 bis 7,
wobei die Einlassbohrung in ein Sammelbecken mündet, das mit dem Messkanal verbunden ist und derart ausgestaltet ist, dass nur dann Flüssigkeit in den Messkanal vordringt, wenn das Sammelbecken vollständig mit Flüssigkeit gefüllt ist.

9. Vorrichtung nach einem der Ansprüche 1 bis 8,
wobei der Messkanal mehr als eine Markierung aufweist.

10. Vorrichtung nach einem der Ansprüche 1 bis 9,
wobei die Einlassbohrung mit einem elastischen Material ausgekleidet ist, das bevorzugt in Form eines an die Form der Einlassbohrung angepassten Einsatzes ausgestaltet ist.

11. Vorrichtung nach einem der Ansprüche 1 bis 10,
wobei die Einlassbohrung einen oberen Teil umfasst, dessen Umfang den des eingeführten Gerätes übersteigt, bevorzugt in Form einer Halbkugel oder eines Ausschnittes daraus,
sowie einen unteren Teil, dessen Umfang an wenigstens einer Stelle so bemessen ist, dass das vertikale Einführen des Gerätes begrenzt wird.

12. Vorrichtung nach einem der Ansprüche 1 bis 11,
wobei das vertikale Einführen des Gerätes dadurch begrenzt wird, dass die Abgabeöffnung auf eine das weitere vertikale Einführen verhindernde Struktur der Einlassbohrung aufsetzt.

13. Verfahren zur Bestimmung des Volumens einer Flüssigkeit, die mit Hilfe eines zur gesteuerten Aufnahme und Abgabe einer Flüssigkeit geeigneten Gerätes aufgenommenen oder abgegebenen wird, umfassend die Schritte
a1) Einführen des flüssigkeitsgefüllten Gerätes in die Einlassbohrung der Vorrichtung nach einem der Ansprüche 1 bis 12,
b1) druckabschließendes Abgeben der in dem Gerät enthaltenen Flüssigkeit, so dass die Flüssigkeitssäule im Messkanal vordringt, und
c1) Detektieren, ob die im Messkanal vordringende Flüssigkeitssäule die Markierung erreicht hat,
oder umfassend die Schritte:
a2) Bereitstellen der Vorrichtung nach einem der Ansprüche 1 bis 12 mit einem im Messkanal vorgelegten Flüssigkeitsvolumen,
b2) Einführen des zur gesteuerten Aufnahme und Abgabe der Flüssigkeit geeigneten Gerätes,
c2) unter Verwendung des Gerätes Aufnehmen eines festgelegten Volumens aus der im Messkanal vorgelegten Flüssigkeit, so dass die im Messkanal vorgelegte Flüssigkeitssäule zurückweicht,
d2) Detektieren, ob die im Messkanal zurückweichende Flüssigkeitssäule die Markierung erreicht hat.

14. Verfahren gemäß Anspruch 13,
weiterhin umfassend nach Schritt c1) den Schritt:
d1) Entfernen der Flüssigkeit aus der Vorrichtung.
